Europäisches Patentamt

**European Patent Office**

**Office européen des brevets**

(11) Veröffentlichungsnummer: **0 011 271**
**A1**

# EUROPÄISCHE PATENTANMELDUNG

(21) Anmeldenummer: **79104451.4**

(22) Anmeldetag: **12.11.79**

(51) Int. Cl.³: **G 01 N 27/72**

---

(30) Priorität: **11.11.78 DE 2848981**

(43) Veröffentlichungstag der Anmeldung:
**28.05.80 Patentblatt 80/11**

(84) Benannte Vertragsstaaten:
**AT CH FR GB IT NL SE**

(71) Anmelder: **Fenker, Max, Dr.**
**Schwanbergstrasse 6**
**D-8720 Schweinfurt(DE)**

(72) Erfinder: **Fenker, Max, Dr.**
**Schwanbergstrasse 6**
**D-8720 Schweinfurt(DE)**

(74) Vertreter: **Kraus, Walter, Dr. et al,**
**Patentanwälte Dres. Kraus & Weisert Irmgardstrasse 15**
**D-8000 München 71(DE)**

---

(54) **System zur induktiven Prüfung oder Erwärmung elektrisch leitfähiger Werkstoffe.**

(57) Die vorliegende Erfindung betrifft ein System zur induktiven Werkstoffprüfung mit einem in Rückkopplung arbeitenden elektronischen Verstärker. Dieses System ist dadurch gekennzeichnet, daß das zu prüfende Werkstück als Rückkopplung übertragendes bzw. dämpfendes Teil (4) zwischen der an den Verstärker (1) geschalteten Eingangsinduktivität (2) und der Ausgangsinduktivität (3) liegt.

FIG.1

EP 0 011 271 A1

Croydon Printing Company Ltd.

2366/1i

Dr. Max FENKNER, 8720 Schweinfurt

## System zur induktiven Prüfung oder Erwärmung elektrisch leitfähiger Werkstoffe

Die Erfindung betrifft ein System zur induktiven Prüfung oder Erwärmung elektrisch leitfähiger Werkstoffe. Das System ist sowohl zur zerstörungsfreien Prüfung ferromagnetischer und nicht-ferromagnetischer Werkstoffe, als auch, in spezieller Ausführung, zur induktiven Erwärmung ferromagnetischer Werkstücke geeignet.

In der zerstörungsfreien Werkstoffprüfung sind vielfältige Variationen induktiver Verfahren und Geräte bekannt (Heptner u. Stroppe, Magnetische und magnetinduktive Werstoffprüfung, Leipzig 1965). Das gemeinsame Grundprinzip dieser Verfaıren ist die Beobachtung der Induktivitätsänderung einer Spule durch das damit in elektromagnetischen Kontakt gebrachte Werkstück. Je nach Prüfungsziel werden dabei die durch Rückwirkungen der ferromagnetischen und/oder Leitfähigkeitseigenschaften der Werkstücke hervorgerufenen Induktivitätsänderungen gemessen und im direkten oder indirekten Vergleich elektronisch ausgewertet. Während Prüfaufgaben, wie Materialverwechselung, Dimensions- und Wärmebehandlungsunterschiede etc., an ferromagnetischen Werkstücken durch niederfrequent arbeitende, auch größere Dimensionen erfassende induktive Vergleichsverfahren in zufriedenstellender Weise bewältigt werden (E.A. Becker u. M. Vogt, Materialprüfung 15 (1973), Nr. 5, S. 182), erfordern die für Leitfähigkeits-, Schichtdicken- und Oberflächenprüfungen angewendeten hochfrequenten Wirbelstromverfahren überwiegend klein dimensionierte, induktiv an das Prüfobjekt angekoppelte Sonden, die zur Abtastung der Prüflingsoberfläche aufwendiger Bewegungsmechanismen für Werkstück oder Prüfsonde bedürfen (F. Förster, Metall 27 (1973), Nr. 10, S. 988).

Es sind aber auch Verfahren bekanntgeworden, die die absolute Induktivitätsänderung einer das Prüfobjekt umfassenden Prüfspule direkt für eine Dimensionsprüfung auswerten (R. Hecker, Kerntechnik 8 (1966), Nr. 10, S. 445), sowie Verfahren, die die Bedämpfung eines in Resonanz arbeitenden Schwingungskreises durch induktive Rückwirkung des in einer Spule eingelegten Prüfobjekts zur Leitfähigkeitsmessung ausnützen (Sensor Corp. Greenwich, Automatation, September 1968, S. 11). Die Empfindlichkeit dieser Verfahren reicht jedoch nur für gröbere Sortierungen nach Dimension oder Materialzusammensetzung aus.

Aufgabe der Erfindung ist es, eine Prüfmethode zu entwikkeln, die die begrenzten Möglichkeiten und die Mängel der bekannten Verfahren überwindet und bei einfachem Prüfablauf eine hohe Prüfempfindlichkeit erreicht. Das nachfolgend beschriebene System erfüllt diese Forderungen bei jeweils entsprechender Dimensionierung in allen Bereichen der Werkstoff-, Eigenschafts- und Oberflächenprüfung; darüber hinaus ist das Prinzip geeignet, eine induktive Wärmebehandlung an ferromagnetischen Werkstücken durchzuführen.

Das neue Verfahren besteht aus einer gesteuerten Anwendung des in der elektronischen Verstärkertechnik als Störung bekannten Rückkopplungseffekts. Erfindungsgemäß wird das zu prüfende bzw. zu erwärmende Werkstück als rückkopplungsübertragendes Teil zwischen die an den elektronischen Verstärker geschalteten Eingangs- und Ausgangsinduktivitäten gelegt, so daß die Erzeugung oder Begrenzung von Rückkopplungsschwingungen durch das Werkstück beeinflußt wird. Wesentlich für die Anwendung der Rückkopplung in der zerstörungsfreien Werkstoffprüfung ist die meßtechnische Ausnützung der Beeinflussung des abstandabhängigen Abfalls des elektromagnetischen Wechselfeldes zwischen den räumlich getrennten Ausgangs- und Eingangsspulen durch das im Feld liegende Werkstück, wobei ferromagnetische Eigenschaften die Rückkopplung verstärken und Leitfähigkeitseigenschaften die Rückkopplung dämpfen. Das von den Werkstückeigenschaften abhängige Prüfergebnis erscheint als Frequenzänderung der selbsterregten Schwingung sowie als Änderung der Spannungen und Ströme am Verstärkerein- und -ausgang. Als geeignet für eine direkte elektronische Auswertung haben sich neben der Frequenz die Eingangsspannung und der Ausgangsstrom erwiesen. Das System arbeitet als Absolutverfahren ohne Vergleichsobjekt und ohne Vergleichsspannung.

Durch Anpassung der Dimensionen der Eingangs- und Ausgangsspulen an den Verstärker und die Werkstückdimensionen können die Selbsterregungsfrequenz, die durch den Spulenabstand gegebene Prüflänge und der Strom in der Ausgangsspule dem Prüfziel bzw. der gewünschten induktiven Erwärmung in weiten Grenzen angepaßt werden. So läßt sich aufgrund des Skineffekts durch Frequenzen im KHz-Bereich eine hohe Empfindlichkeit gegenüber Oberflächenfehlern genauso erreichen, wie bei niedriger Frequenz eine empfindliche Unterscheidung von Material- und Wärmebehandlungsunterschieden. Bei der Benutzung von Hochleistungsverstärkern ist an ferromagnetischen Werkstücken im Bereich der Ausgangsspule eine partielle, am Curie-Punkt des Materials selbstbegrenzende, induktive Erwärmung durchführbar.

Anhand der folgenden Zeichnungen werden Aufbau und Wirkungsweise des erfindungsgemäßen Systems näher beschrieben.

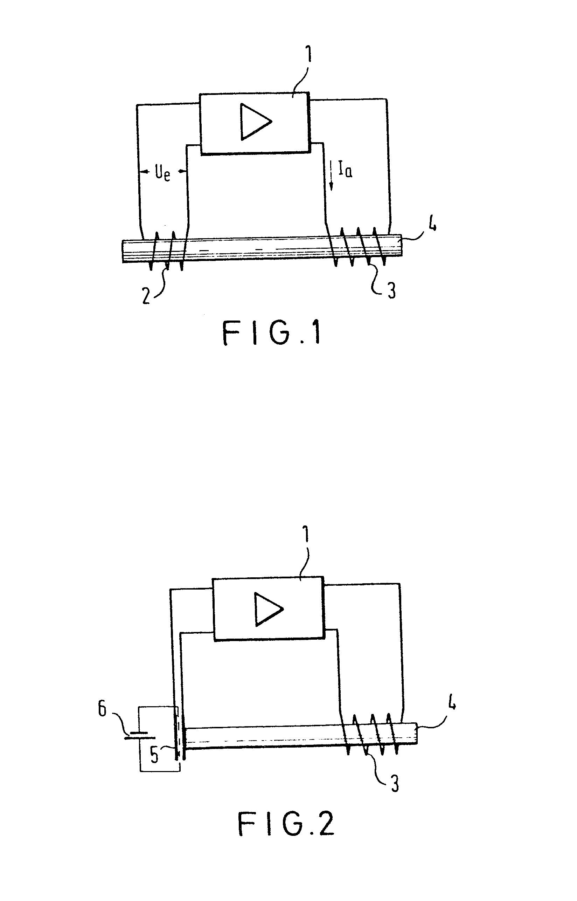

Aus Fig. 1 ist der Aufbau des Rückkopplungssystems mit Eingangs- und Ausgangsspule ersichtlich.

Fig. 2 zeigt eine Rückkopplungsschaltung mit einer rein magnetisch arbeitenden Ankopplung des Verstärkereingangs.

In Fig. 1 ist der Eingang des elektronischen Verstärkers 1 mit der Spule 2 verbunden; am Verstärkerausgang liegt die Spule 3. Die Spulen 2 und 3 sind durch das Rückkopplung übertragende Teil 4 elektromagnetisch gekoppelt. Unter der Verstärkerausgangsspannung $U_a$ fließt in der Spule 3 ein Strom $I_a$, der im Prüfobjekt 4 ein Magnetfeld induziert, welches mit dem Teil 4 die Spule 2 durchsetzt. Die hierdurch in der Spule 2 induzierte Spannung wird als negative Eingangsspannung $U_e$ dem Verstärker zugeleitet. Das System schwingt selbsttätig mit einer gleichbleibenden Frequenz, wenn die in der Spule 2 induzierte Spannung $U_e$ einen Wert erreicht, der mit der Ausgangsspannung $U_a$ und dem Verstärkungsfaktor V zusammenhängt, durch $U_e = -U_a/V$. Bei festeingestellter Verstärkung ändern sich die Frequenz der Rückkopplungsschwingung, die Eingangsspannung und der Ausgangsstrom in direkter Abhängigkeit von den elektromagnetischen Eigenschaften des Rückkopplung übertragenden bzw. dämpfenden Teils 4.

Fig. 2 zeigt ein analoges System, wobei die Eingangsspule 2 aus Fig. 1 ersetzt ist durch ein Hallelement 5 mit der dazugehörigen Gleichspannungsquelle 6. Die nur durch das Magnetfeld des Rückkopplung übertragenden Teils 4 hervorgerufene Hallspannung dient hier als Eingangsspannung zum Verstärker 1.

0011271

<u>P a t e n t a n s p r ü c h e</u>

1. System zur induktiven Werkstoffprüfung mit einem in Rückkopplung arbeitenden elektronischen Verstärker, dadurch gekennzeichnet, daß das zu prüfende Werkstück als Rückkopplung übertragendes bzw. dämpfendes Teil (4) zwischen der an den Verstärker (1) geschalteten Eingangsinduktivität (2) und der Ausgangsinduktivität (3) liegt.

2. System nach Anspruch 1, dadurch gekennzeichnet, daß die Eingangsspannung des Verstärkers (1) durch eine an das Rückkopplung übertragende Teil (4) angekoppelte, nur magnetisch empfindliche Sonde (5) erzeugt wird.

3. System nach den Ansprüchen 1 und 2, dadurch gekennzeichnet, daß die Ausgangsleistung des Verstärkers (1) zur Erzeugung einer induktiven Erwärmung des Rückkopplung übertragenden Teils (4) im Bereich der Ausgangsinduktivität (3) benutzt wird.

FIG.1

FIG.2

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 3 164 993 (T.R. SCHMIDT)<br>✳ Spalte 3, Zeile 17 bis Spalte 5, Zeile 60; Abbildungen 1,2 ✳<br><br>-- | 1,2 |
| A | FR - A - 1 596 799 (A.I. SAVIN)<br>✳ Das ganze Dokument ✳<br><br>-- | 1 |
| A | US - A - 4 005 359 (W.N. SMOOT)<br>✳ Das ganze Dokument ✳<br><br>---- | 1 |

**KLASSIFIKATION DER ANMELDUNG (Int.Cl. 3)**

G 01 N 27/72

**RECHERCHIERTE SACHGEBIETE (Int. Cl. 3)**

G 01 N 27/72
   27/82
   27/02
   27/00
H 05 B  5/04

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 30-01-1980 | DUCHATELLIER |

EPA form 1503.1   06.78